# FASCICULE DE BREVET EUROPEEN

(11) **EP 2 422 126 B1**
(45) Date de publication et mention de la délivrance du brevet: **23.01.2013**
(21) Numéro de dépôt: 10714324.0
(22) Date de dépôt: 22.04.2010
(51) Int. Cl.: F16L 3/00, F02C 7/32

(54) **SUPPORT COUDE D'EQUIPEMENTS EN AERONAUTIQUE**
KNIETRÄGER FÜR LUFTFAHRT-EINRICHTUNGEN
ELBOW SUPPORT FOR AERONAUTICAL EQUIPMENT

(30) Priorité: 24.04.2009 FR 0952685
(43) Date de publication de la demande: 29.02.2012
(73) Titulaire: SNECMA, 75015 Paris (FR)
(72) Inventeur: STEPHAN, Marc, F-77000 Melun (FR); ZIEGLER, Michel, Henri, F-91810 Vert Le Grand (FR)
(74) Mandataire: Ilgart, Jean-Christophe
(86) Numéro de dépôt international: PCT/EP2010/055383
(87) Numéro de publication internationale: WO 2010/122122

(56) Documents cités:
- FR-A- 2 914 275

## Description

L'invention a trait à un support coudé d'équipements en aéronautique.

Les appareils aéronautiques comme les turbomachines comprennent souvent une quantité d'équipements auxiliaires les entourant, notamment des câbles électriques d'alimentation ou de transmission de signaux et de commandes, ainsi que des canalisations de transport de fluides, qui doivent être maintenus près de l'appareil. On utilise typiquement des supports coudés, dont un côté est fixé à la structure de l'appareil par des boulons et dont l'autre extrémité porte les câbles, canalisations et autres par des colliers de serrage, des paires de lames élastiques ou d'autres moyens. Un tel support est décrit dans le document FR 2 914 275. Ces supports étant généralement réalisés en pliant des plaques de tôles, leur rigidité est faible et ils doivent être renforcés par des nervures jointes aux deux côtés de la tôle par des arêtes. La nervure est traditionnellement soudée à la plaque par un cordon continu ou par points, ce qui à l'inconvénient d'augmenter beaucoup le temps de fabrication et d'enchérir ces supports. Le but fondamental de l'invention est de remplacer le raccordement soudé des nervures à la plaque principale des supports par une liaison plus simple à établir.

Sous une forme générale, l'invention est relative à un support coudé d'équipements en aéronautique, comprenant une plaque principale ayant un côté de fixation à une structure porteuse et un côté porteur des équipements, ainsi qu'une nervure de renfort jointe à des faces internes desdits côtés par des arêtes, caractérisé en ce que la nervure est distincte de la plaque principale (c'est-à-dire qu'elle reste un solide séparé, en l'absence de soudure ou de toute liaison intime entre elles) et comprend des embouts traversant des lumières de ladite plaque, les embouts étant partiellement entaillés par des fentes obliques s'étendant partiellement dans les lumières à des portions de fond des fentes et partiellement hors des lumières, au-dessus de faces externes desdits côtés, à des portions de débouché des fentes, les embouts étant tordus à des portions extrêmes et débordant des lumières en s'engageant sur les faces externes desdits côtés.

L'ajustement de la nervure de renfort à la plaque principale du support s'effectue donc par une simple torsion des embouts, qui peut être faite par un outil usuel. Combinée à la direction et à la position des fentes, cette torsion mène à un coincement de la nervure sur la plaque principale quoiqu'elles restent distinctes l'une de l'autre, mais la solidité de l'ensemble est suffisante.

L'invention sera maintenant décrite plus en détail au moyen des figures suivantes:
- la figure 1 est une vue générale d'un support classique,
et les autres figures illustrent l'invention :
- la figure 2 est une vue générale de l'invention,
- la figure 3 est une vue de détail de l'assemblage de la nervure à la plaque principale, prise sur le côté de la plaque,
- et la figure 4 est une vue analogue à la précédente, prise face à la plaque.

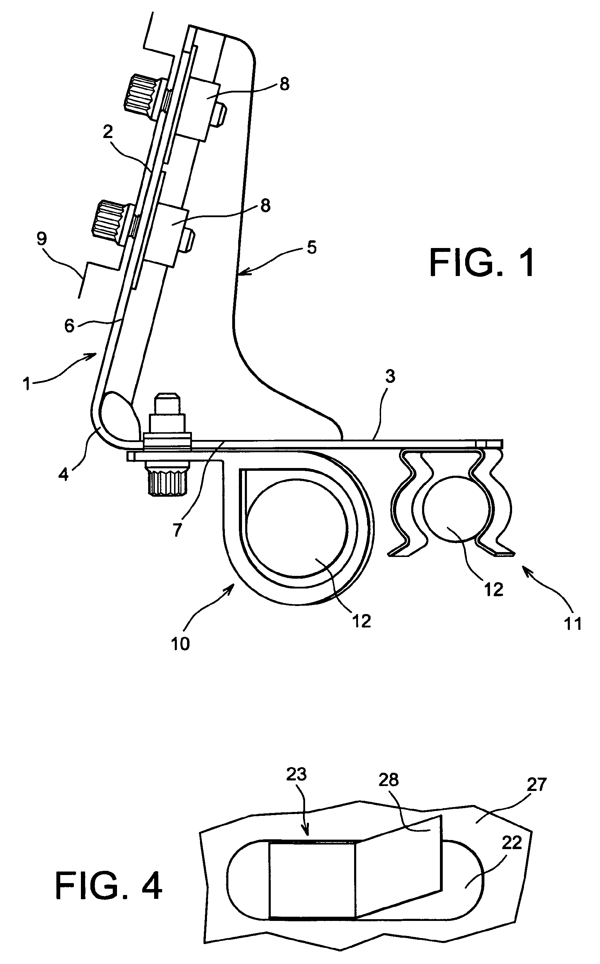

Le support de la figure 1 comprend une plaque principale 1 composée d'un premier côté 2 et d'un second côté 3 réunis à un angle 4 selon une disposition en équerre ou d'une autre valeur d'angle. Les côtés 2 et 3 sont encore réunis par une nervure 5 de renfort qui s'appuie sur eux par deux arêtes, respectivement 6 et 7. La liaison se fait par des soudures. Un des côtés 2 comprend des boulons 8 de fixation à une structure 9 d'un appareil aéronautique, et le second côté 3 porte, dans cette réalisation particulière, un collier de serrage 10 et une agrafe de serrage 11 à deux lames élastiques opposées pour retenir des câbles ou des canalisations 12.

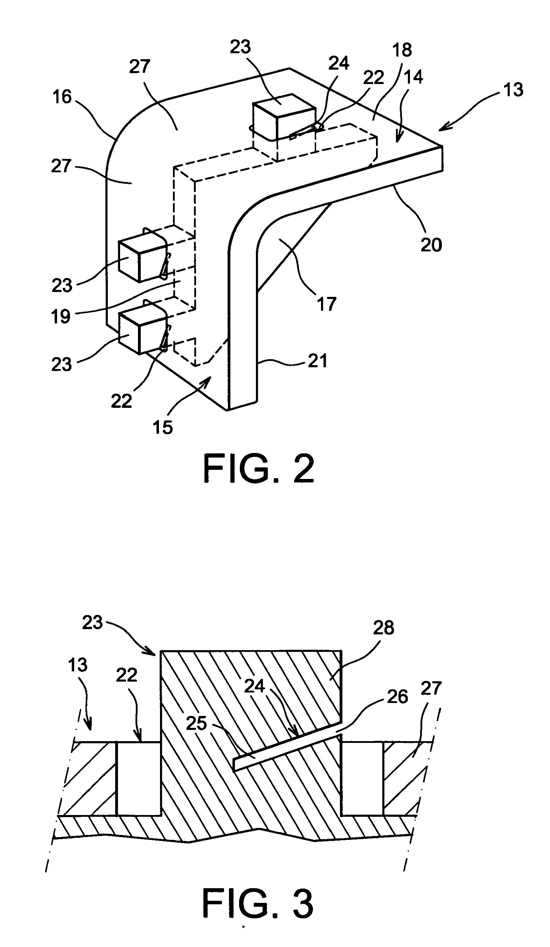

L'invention est d'abord représentée à la figure 2. Elle comprend encore une plaque principale 13 composée de deux côtés 14 et 15 joints à un angle 16, et une nervure 17 de renfort dont des arêtes 18 et 19 s'appuient sur des faces internes 20 et 21 respectives, dans la concavité de la plaque principale 13, de ses côtés 14 et 15. Le contact des arêtes 18 et 19 est toutefois un appui simple, sans aucune soudure. La plaque principale 13 est garnie de lumières 22, au nombre de trois dont une est établie à travers le premier côté 14 et les deux autres à travers le second côté 15 ; et la nervure 17 est garnie du même nombre d'embouts 23 passant respectivement à travers les lumières 22. Une d'entre elles saille donc de l'arête 18 et les deux autres de l'arête 19.

Certains détails de construction seront décrits au moyen de la figure 3. Chacun des embouts 23 est entaillé partiellement par une fente 24 dont la direction est oblique et la position choisie de façon qu'une portion de fond 25 de la fente 24 s'étende dans la lumière 22 mais qu'une portion de débouché 26 s'étende hors de cette lumière 22, au-dessus de la face externe 27 d'un des côtés 14 ou de l'autre 15 de la plaque principale 13, lorsque l'appui de l'arête 18 ou 19 sur la face interne 20 ou 21 est réalisé. La torsion d'une extrémité 28 de l'embout 23, au-delà de la fente 24, le déporte donc vers le côté de la lumière 22 de manière qu'une portion s'étende au-dessus de la face externe 27, ce qu'on a représenté aussi à la figure 4. Le frottement effectué par la face supérieure de la fente 24 sur la face externe 27 entraîne un coincement de l'arête 18 ou 19 sur la face interne 20 ou 21 et maintient donc la nervure 17 en place sur la plaque principale 13.

Le support est inchangé par rapport à la conception classique en ce qui concerne la fixation à la structure 9 de l'appareil et aux canalisations 12. Les moyens de fixation respectifs sont sur l'un ou l'autre des côtés 14 et 15.

Quoique la cohésion entre la plaque principale 13 et la nervure 17 semble plus faible qu'avec une soudure, il a été constaté que la résistance de l'assemblage présent donnait une aussi bonne rigidité du support. Il est toutefois préférable que les lumières et les embouts soient au nombre de trois comme on l'a représenté pour que l'assemblage soit suffisamment ferme, isostatique mais sans flottement. Une autre précaution de construction consiste à pouvoir établir les lumières 22 avec une forme oblongue, plus allongée dans une direction d'alignement (parallèle à celle des arêtes 18 et 19), de manière qu'existent des jeux dans les lumières 22, autour des embouts 23, plus importants dans cette direction d'allongement que dans la direction perpendiculaire, ce qui apparaît bien à la figure 2. Il est alors plus facile de placer la nervure 17.

## Revendications

1. Support coudé d'équipements (12) en aéronautique, comprenant une plaque principale (13) ayant un côté de fixation à une structure porteuse et un côté porteur des équipements, ainsi qu'une nervure de renfort (17) jointe à des faces internes (20,21) desdits côtés par des arêtes (18,19), **caractérisé en ce que** la nervure est distincte de la plaque principale et comprend des embouts (23) traversant des lumières (22) de ladite plaque (13), les embouts étant partiellement entaillés par des fentes (24) obliques s'étendant partiellement dans les lumières à des portions de fond (25) des fentes et partiellement hors des lumières, au-dessus de faces externes (27) desdits côtés, à des portions de débouché (26) des fentes (24), les embouts étant tordus à des portions extrêmes (28) et débordant des lumières en s'engageant sur les faces externes (27) desdits côtés.

2. Support coudé d'équipements en aéronautique suivant la revendication 1, **caractérisé en ce que** les lumières sont alignées et oblongues, allongées dans une direction d'alignement des lumières (22), des jeux dans les lumières et autour des embouts (23) étant plus grands dans ladite direction d'alignement que dans une direction perpendiculaire.

3. Support coudé d'équipements en aéronautique suivant l'une quelconque des revendications 1 ou 2, **caractérisé en ce que** les lumières et les embouts sont au nombre de trois, dont deux sur un des côtés et un sur un autre des côtés.

## Claims

1. An elbow bracket for aeronautical equipment (12), including a main plate (13) having a side to be attached to a supporting structure and a side for carrying equipment, together with a reinforcing rib (17) attached to inner faces (20, 21) of the said sides by edges (18, 19), **characterised in that** the rib is separate from the main plate and includes end-pieces (23) traversing slots (22) of the said plate (1.3), where the end-pieces are partially cut into by oblique slits (24) extending partially in the slots to bottom portions (25) of the slits and partially outside the slots, above outer faces (27) of the said sides, to emerging portions (26) of the slits (24), and where the end-pieces are twisted at end portions (28) and protrude beyond the slots when they engage on the outer faces (27) of the said sides.

2. An elbow bracket for aeronautical equipment according to claim 1, **characterised in that** the slots are aligned and oblong, lengthened in a direction of alignment of the slots (22), where plays in the slots and around the end-pieces (23) are larger in the said alignment direction than in the perpendicular direction.

3. An elbow bracket for aeronautical equipment according to either of the claims 1 or 2, **characterised in that** there are three slots and three end-pieces, two of them on one of the sides and one of them on the other side.

## Patentansprüche

1. Gebogener Halter für Einrichtungen (12) in der Luftfahrt, umfassend eine Hauptplatte (13), die eine Seite zur Befestigung an einer Tragstruktur und eine Seite zum Tragen der Einrichtungen aufweist, sowie eine Verstärkungsrippe (17), die durch Kanten (18, 19) mit Innenflächen (20, 21) der Seiten verbunden ist, **dadurch gekennzeichnet, dass** die Rippe von der Hauptplatte getrennt ist und Anschlussstücke (23) umfasst, die Öffnungen (22) der Platte (13) durchgreifen, wobei die Anschlussstücke durch schräge Schlitze (24) teilweise eingeschnitten sind, die an Grundabschnitten (25) der Schlitze teilweise in den Öffnungen verlaufen und an Austrittsabschnitten (26) der Schlitze (24) teilweise außerhalb der Öffnungen oberhalb von Außenflächen (27) der Seiten verlaufen, wobei die Anschlussstücke an Endabschnitten (28) verdreht sind und unter Übergreifen der Außenflächen (27) der Seiten über die Öffnungen hinausragen.

2. Gebogener Halter für Einrichtungen in der Luftfahrt, nach Anspruch 1, **dadurch gekennzeichnet, dass** die Öffnungen ausgerichtet und länglich, in einer Fluchtrichtung der Öffnungen (22) langgestreckt sind, wobei Spiele in den Öffnungen und um die Anschlussstücke (23) herum in der Fluchtrichtung größer sind als in einer senkrechten Richtung.

3. Gebogener Halter für Einrichtungen in der Luftfahrt, nach einem der Ansprüche 1 oder 2, **dadurch gekennzeichnet, dass** die Anzahl der Öffnungen und der Anschlussstücke drei beträgt, wovon zwei auf einer der Seiten vorhanden sind und eine(s) auf einer anderen der Seiten vorhanden ist.
